# EUROPÄISCHE PATENTSCHRIFT

(11) **EP 1 360 088 B1**
(45) Veröffentlichungstag und Bekanntmachung des Hinweises auf die Patenterteilung: **26.11.2008**
(21) Anmeldenummer: 02724169.4
(22) Anmeldetag: 15.02.2002
(51) Int. Cl.: B60Q 11/00

(54) **LICHTANLAGE FÜR KRAFTFAHRZEUGE**
LIGHTING SYSTEM FOR MOTOR VEHICLES
SYSTEME D'ECLAIRAGE POUR VEHICULES AUTOMOBILES

(30) Priorität: 17.02.2001 DE 10107578
(43) Veröffentlichungstag der Anmeldung: 12.11.2003
(73) Patentinhaber: Hella KGaA Hueck & Co., 59552 Lippstadt (DE)
(72) Erfinder: REINBACH, Martin, Howick, Auckland (NZ); GROSS-BÖLTING, Michael, 59581 Ward (DE)
(86) Internationale Anmeldenummer: PCT/EP2002/001662
(87) Internationale Veröffentlichungsnummer: WO 2002/066290

(56) Entgegenhaltungen:
- EP-A- 0 906 851
- DE-C- 19 618 010
- FR-A- 2 783 998

## Beschreibung

Die Erfindung bezieht sich auf eine Lichtanlage für Kraftfahrzeuge, insbesondere eine Blinklichtsignalanlage, mit einer Stromquelle und einer Stromüberwachungsschaltung für mindestens eine Lampe, wobei die Lampen Glühlampen und/oder Leuchtendioden (LEDs) sind. Die Erfindung bezieht sich insbesondere auf eine Parallelschaltung von zwei oder mehr Lampen. Die Stromüberwachungsschaltung dient der Lampenausfallkontrolle, wobei der Strom, der insgesamt in die Parallelschaltung der Lampen fließt, gemessen wird. Beim Ausfall einer Lampe wird der Stromfluß durch einen der parallelen Stromzweige unterbrochen, wodurch der Strom, der insgesamt in die Parallelschaltung fließt, abnimmt. Dabei wird ein Stromwert unterhalb eines vorbestimmten Schwellwertes von der Stromüberwachungsschaltung als Ausfall einer Lampe gedeutet.

Da die Stromaufnahme von Glühlampen und Leuchtdioden sehr unterschiedlich ist, ist die Stromüberwachung für eine Parallelschaltung, welche Glühlampen und Leuchtdioden oder nur Leuchtdioden aufweist, problematisch, wenn die Stromüberwachungsschaltung, insbesondere hinsichtlich ihres Schwellwertes, nur für die Verwendung von Glühlampen ausgelegt ist.

Beim Einsatz von Leuchtdioden in einer Parallelschaltung von Lampen, mit einer Stromüberwachungsschaltung, die für eine reine Glühlampen-Parallelschaltung ausgelegt ist, liegt der Strom, der insgesamt in die Parallelschaltung fließt, unterhalb des Schwellwertes, so dass die Stromüberwachungsschaltung fälschlicherweise einen Lampenausfall anzeigen würde, obwohl alle Lampen in Ordnung sind.

Anhand des Beispiels einer Blinklichtsignalanlage für ein Zugfahrzeug mit Anhänger soll das Problem veranschaulicht werden. Eine derartige Blinklichtsignalanlage weist einen Blinkgeber mit integrierter Stromüberwachungsschaltung auf, wobei die Stromüberwachungsschaltung hinsichtlich ihres Schwellwertes auf den Betrieb von vier parallel betriebenen Glühlampen als Blinklampen pro Fahrtrichtung ausgelegt ist (z.B. 2 Blinklampen am Zugfahrzeug und 2 Blinklampen am Anhänger). Der Ausfall einer Glühlampe hätte einen um 25% niedrigeren, unterhalb der Schwelle liegenden Strom zur Folge. Wird nun an das Zugfahrzeug ein Anhänger mit Leuchtdioden als Blinklampen angekuppelt, dann würde die Stromüberwachungsschaltung aufgrund der geringeren, unterhalb der Schwelle liegenden Stromaufnahme fälschlicherweise den Ausfall einer Lampe anzeigen.

Aus der DE 196 18010 C1 ist eine Blinklichtsignalanlage bekannt, die für einen gemischten Betrieb mit Glühlampen und Leuchtdioden ausgelegt ist. Dabei weist der Blinkgeber einen Spannungsteiler auf, der über eine zusätzliche Leitung mit einer den Leuchtdioden zugeordneten Kontrollschaltung verbunden ist. Falls die Leuchtdioden in Ordnung sind simuliert die LED-Kontrollschaltung über die Zusatzleitung und den Spannungsteiler während der gesamten Dauer des Blinkimpulses für die Stromüberwachungsschaltung den Stromverbrauch einer Glühlampe. Diese Blinklichtsignalanlage hat jedoch verschiedene Nachteile. Zum einen wird eine Zusatzleitung zwischen dem Blinkgeber und der LED-Leuchte benötigt. Dies setzt wiederum zusätzliche Anschlüsse an der LED-Leuchte und am Blinkgeber voraus, d.h. der Blinkgeber muß gegenüber einem konventionellen, für reinen Glühlampenbetrieb ausgelegten Blinkgeber modifiziert werden. Darüber hinaus wird in nachteiliger Weise Verlustleistung erzeugt, da während der gesamten Dauer des Blinkimpulses eine Zusatzleistung entsprechend der zu simulierenden Glühlampe erzeugt wird.

Aufgabe der Erfindung ist daher die Schaffung einer Lichtanlage für Kraftfahrzeuge bestehend aus mindestens einer Lampe und einer zugeordneten Stromüberwachungsschaltung, die in einfacher und stromsparender Weise mit Glühlampen und mit Leuchtdioden betrieben werden kann.

Diese Aufgabe wird erfindungsgemäß dadurch gelöst, dass in einem parallel zu den Lampen angeordneten Stromzweig mindestens eine nur für ein bestimmtes Zeitfenster zuschaltbare elektrische Last als Stromsenke vorgesehen ist, wobei das Zeitfenster für das Zuschalten der Last mit einem Kontrollzeitfenster der Stromüberwachungsschaltung synchronisiert ist. Mit anderen Worten wird in der erfindungsgemäßen Lichtanlage bei Verwendung von Leuchtdioden kurzzeitig - während der Stromüberwachungszeit - eine Last als Stromsenke parallel zugeschaltet, die eine einem reinen Glühlampenbetrieb zumindest ähnliche Stromaufnahme simuliert. Nur der tatsächliche Ausfall einer Glühlampe in einem Mischbetrieb aus Glühlampen und Leuchtdioden würde dann zu einem Stromabfall unterhalb des Schwellwertes führen, wodurch ein Lampenausfall ordnungsgemäß angezeigt werden würde. Damit ist es möglich, eine Parallelschaltung von Lampen sowohl mit Glühlampen als auch mit Leuchtdioden zu betreiben, und zwar mit einer einzigen Stromüberwachungsschaltung. Da die Last zur Simulation einer Glühlampe nur kurzzeitig eingeschaltet wird, wird in vorteilhafter Weise nicht unnötig Verlustleistung zu Simulationszwecken erzeugt. Dies hat wiederum den Vorteil einer geringen Erwärmung, was insbesondere dann wichtig ist, wenn die zuschaltbare Last in räumlicher Nähe zu den Leuchtdioden angeordnet ist, da eine Erwärmung der Leuchtdioden in nachteiliger Weise eine Degradation (Verschlechterung des Wirkungsgrades, d.h. eine geringere Lichtausbeute) der Leuchtdioden bewirkt.

Die zuschaltbare Last ist vorzugsweise in der Leuchte, z.B. in einer Blinkleuchte, integriert, in der auch die Leuchtdioden untergebracht sind.

Die Erfindung ermöglicht es daher zum Beispiel, ein Zugfahrzeug, dass mit einem Blinkgeber (inklusive Stromüberwachungsschaltung) für einen Anhängerbetrieb ausgelegt ist, wahlweise mit Anhängern zu benutzen, deren Blinkleuchten mit Glühlampen oder mit Leuchtdioden bestückt sind. Die erfindungsgemäße Lichtanlage bietet somit eine große Flexibilität. Ein zusätzliche Leitung zwischen dem Blinkgeber und der LED-Leuchte ist nicht notwendig.

Anhand der beigefügten Zeichnungen soll die Erfindung nachfolgend näher erläutert werden. Es zeigt:
- Figur 1: die Schaltung einer Blinklichtsignalanlage nach dem Stand der Technik,
- Figur 2: den zeitlichen Verlauf des Blinkimpulses (oben) sowie den Stromverlauf (unten) in einer Blinklichtsignalanlage gemäß Figur 1,
- Figur 3: eine Schaltung für eine Blinklichtsignalanlage gemäß der Erfindung, wobei die Stromüberwachungsschaltung des Blinkgebers nur für Glühlampenbetrieb ausgelegt ist, die Parallelschaltung jedoch sowohl Glühlampen als auch Leuchtdioden aufweist,
- Figur 4: eine Schaltung für eine Blinklichtsignalanlage, in der nur Leuchtdioden angeordnet sind, wobei die Stromüberwachungsschaltung des Blinkgebers allerdings für Glühlampenbetrieb ausgelegt ist,
- Figur 5: eine schematische Darstellung einer Blinklichtsignalanlage mit Glühlampen und mit mit Leuchtdioden bestückten erfindungsgemäßen Blinkleuchten,
- Figur 6: den zeitlichen Verlauf des Blinkimpulses (oben) sowie den Stromverlauf in der Parallelschaltung (unten) in einer Blinklichtsignalanlage gemäß Figur 5
- Figur 7: eine schematische Schaltungsanordnung zum Zuschalten eines ohmschen Widerstandes als Last,
- Figur 8: eine schematische Schaltungsanordnung zum Zuschalten eines Leistungsstransistors als Last.

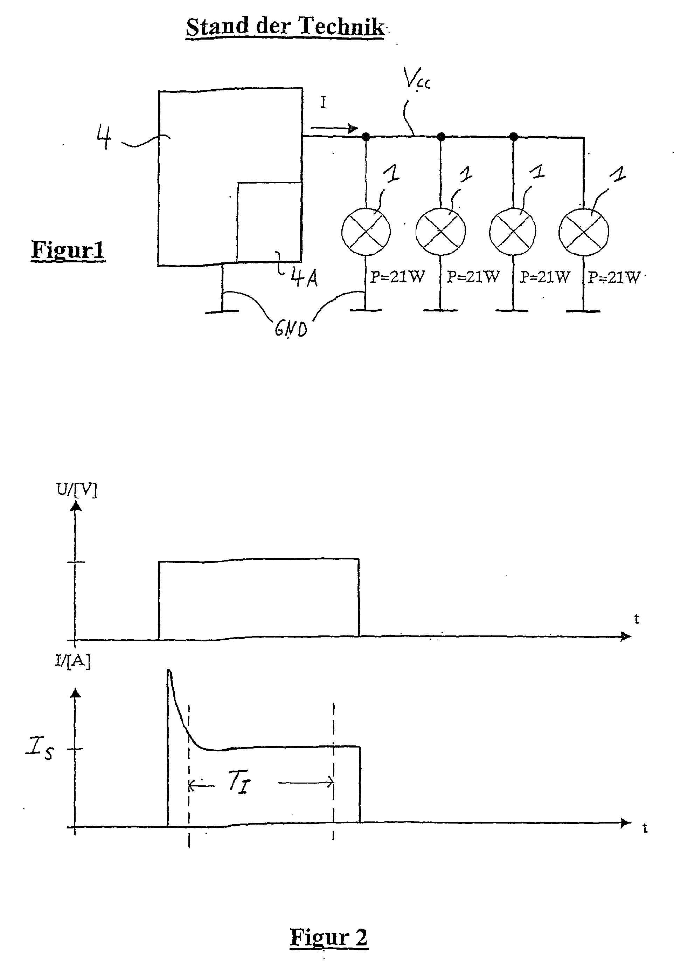

In Figur 1 ist die Schaltung einer Blinklichtsignalanlage nach dem Stand der Technik gezeigt. Sie besteht aus einer Parallelschaltung von in diesem Fall 4 Glühlampen (1) pro Fahrtrichtung, die über einen Blinkgeber (4) von einer gemeinsamen Stromquelle gespeist werden. Dabei ist in dem Blinkgeber (4) eine Stromüberwachungsschaltung (4A) integriert. Die Versorgung der Glühlampen (1), welche in Blinkleuchten (nicht dargestellt) angeordnet sind, erfolgt über den Blinkgeber (4) mittels einer Versorgungsleitung (Vcc), die vom Blinkgeber taktweise mit der Bordnetzspannung des Kraftfahrzeuges beaufschlagt wird. Darüber hinaus sind sowohl der Blinkgeber (4) als auch die Glühlampen-Blinkleuchten mit Masse (GND) verbunden.

Die Stromüberwachungsschaltung (4A) misst den insgesamt in die Parallelschaltung fließenden Strom (I) und vergleicht diesen mit einem Schwellwert (I_{S}). Im oberen Diagramm der Figur 2 ist der Blinkimpuls dargestellt. Die Dauer eines Blinkimpulses beträgt ca. 1 Sekunde. Im unteren Diagramm der Figur 2 ist der korrespondierende Stromverlauf während des Blinkimpulses dargestellt. Da Glühlampen Kaltleiter sind, ist der Einschaltstrom zu Beginn des Blinkimpulses recht groß. Er klingt dann allerdings schnell auf einen stabilen Wert ab. Dabei ist das Kontrollzeitfenster (TI) für die Stromüberwachung so gelegt, dass die Spitze des Einschaltstromes ausgeblendet wird. Wird nun innerhalb des Kontrottzeitfensters ein Strom delektiert, der unterhalb der Schwelle (I_{S}) liegt, so wird ein Ausfall einer Glühlampe (1) erkannt.

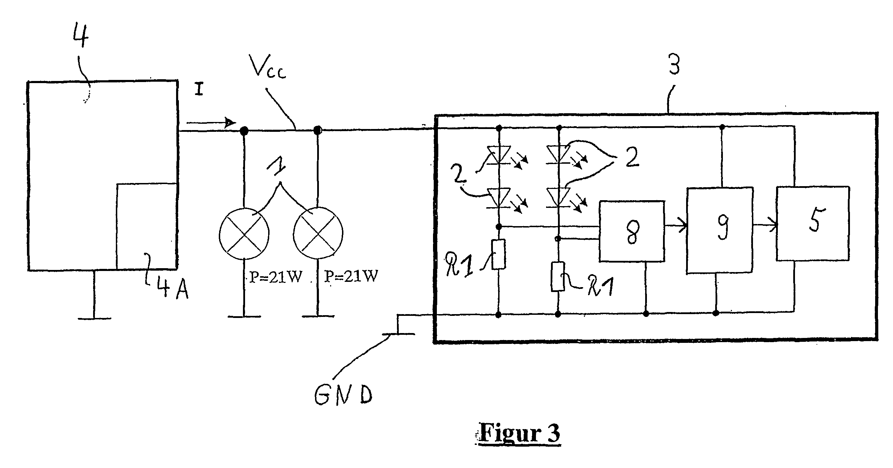

Würde man nun zwei Glühlampen (1) durch Leuchtdioden (2) ersetzen (siehe Figur 3), so läge der Strom in jedem Fall unter der in Figur 1 dargestellten Schwelle, da die Stromaufnahme der Leuchtdioden wesentlich geringer ist als die einer Glühlampe. Dies würde dazu führen, dass in jedem Fall die Lampenausfallerkennung ansprechen würde, obwohl alle Lampen in Ordnung sind.

In Figur 3 ist eine erfindungsgemäße Blinklichtanlage gezeigt, bei der sowohl Glühlampen (1) als auch Leuchtdioden (2) eingesetzt werden. Dabei sind die Leuchtdioden in einer Blinkleuchte (3) integriert, die zum Beispiel an einem Anhänger angeordnet sein kann. Die erfindungsgemäße LED-Blinkleuchte (3) weist - wie eine konventionelle Blinkleuchte - lediglich zwei Anschlüsse auf, und zwar für die Versorgungsleitung (Vcc) und für Masse (GND).

Aus Gründen der Übersichtlichkeit sind nur zwei Reihen mit Leuchtdioden (2) gezeigt, von denen jede jeweils zwei Leuchtdioden enthält. Es sind jedoch je nach erforderlicher Leuchtstärke eine Vielzahl von parallel geschalteten Leuchtdioden-Reihen mit jeweils einer Vielzahl von Leuchtdioden denkbar. In jeder Reihe ist ein Strombegrenzungswiderstand (1) angeordnet, damit die Leuchtdioden in einem optimalen Arbeitspunkt betrieben werden.

Erfindungsgemäß ist nun eine zuschaltbare Last (5) vorgesehen, die nur für ein bestimmtes Zeitfenster (TI) zugeschaltet wird, um kurzzeitig einen erhöhten Stromverbrauch zur Simulation einer Glühlampe zu generieren. Dabei ist dieses Zeitfenster mit einem Kontrollzeitfenster der Stromüberwachungsschaltung (4A) im Blinkgeber (4) synchronisiert. Die zuschaltbare Last (5) kann ein ohmscher Widerstand oder ein Halbleiter, z.B. ein Leistungstransistor, sein. Als Schaltelement (7) zum Zu- und Abschalten der Last (5) kann beispielsweise ein Transistor verwendet werden.

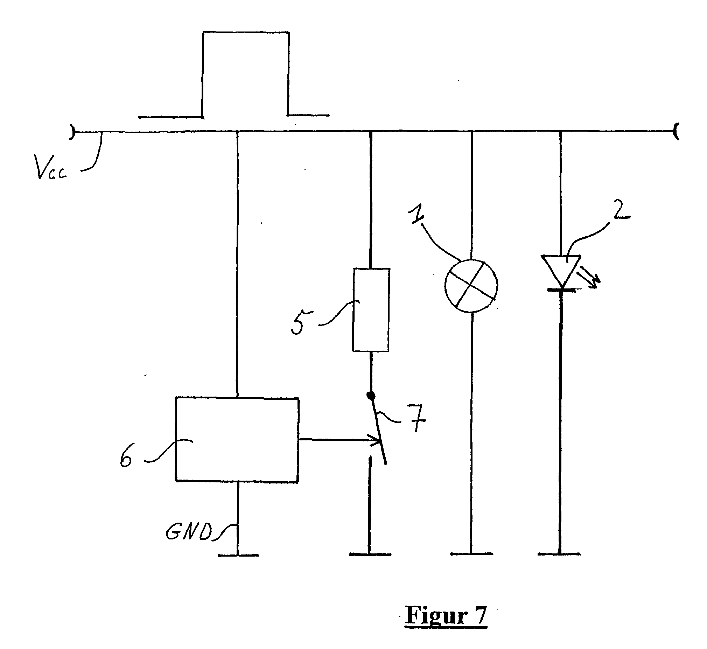

In Figur 7 ist eine Parallelschaltung einer Glühlampe (1) und einer Leuchtdiode (2) gezeigt, wobei in einem weiteren parallel dazu geschalteten Stromzweig ein ohmscher Widerstand (5) als Last angeordnet ist, der über ein (nur symbolisch dargestelltes) Schaltelement (7) zugeschaltet werden kann. Über der Versorgungsleitung (Vcc) ist symbolisch der Blinkimpuls dargestellt. Die Betätigung des Schaltelements (7) erfolgt über einen Zeitbaustein (6), der beispielsweise ein Verzögerungsglied oder ein Timer sein kann. Getriggert wird dieser Zeitbaustein (6) durch die positive Flanke des Blinkimpulses. Der Zeitbaustein betätigt dann zeitverzögert das Schaltelement (7). Dabei ist der Zeitbaustein (6) in einer bevorzugten Ausführungsform so ausgebildet, dass er das Schaltelement (7) nach einer kurzen Zeitdauer vor Ablauf des Blinkimpulses zum Abschalten der Last (5) erneut betätigt. Die elektronische Darstellung eines solchen Einschaltzeitfensters mit handelsüblichen Bauelementen ist dem Fachmann geläufig. In einer alternativen Ausführungsform arbeitet der Zeitbaustein (6) lediglich als Verzögerungsglied (z.B. als RC-Glied), das die Last (5) kurz vor Ende des Blinkimpulses zuschaltet. Die Bestromung der Last (5) endet dann automatisch mit dem Blinkimpuls.

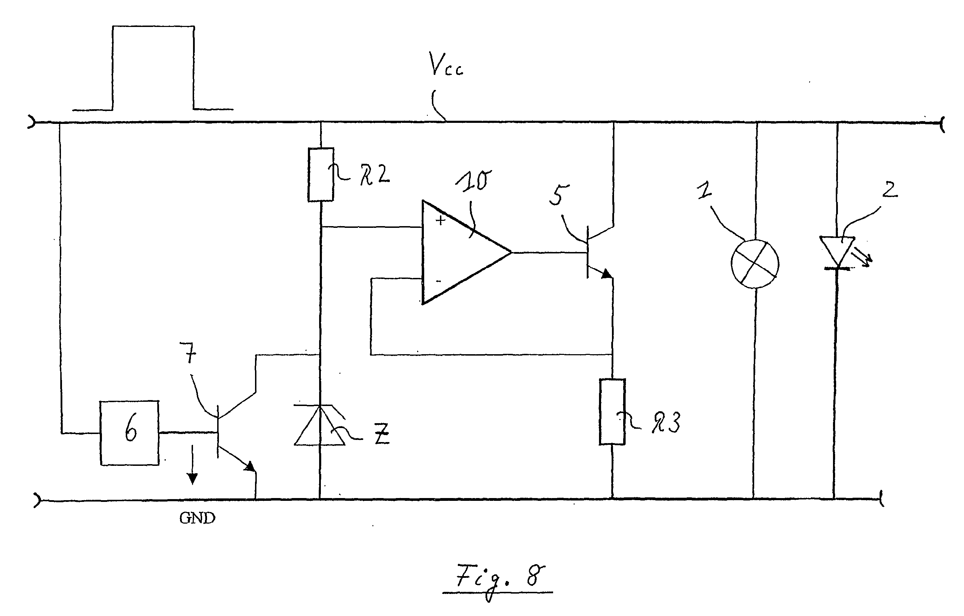

In Figur 8 ist ebenfalls eine Parallelschaltung einer Glühlampe (1) und einer Leuchtdiode (2) gezeigt. Als zuschaltbare Last (5) wird in diesem Fall ein Leistungstransistor eingesetzt, der von einem Operationsverstärker (10) angesteuert wird. Eine zwischen der Versorgungsleitung (Vcc) und Masse (GND) angeordnete Reihenschaltung aus einem Widerstand (R2) und einer Zenerdiode (Z) definiert an dem Abgriff zwischen dem Widerstand (R2) und der Kathode der Zenerdiode (Z) eine Referenzspannung, die auf den Pluseingang des Operationsverstärkers (10) geführt ist. Auf den Minuseingang des Operationsverstärkers (10) ist die Spannung geführt, die der über den Leistungstransistor (5) geschaltete Strom zur Simulation einer Glühlampenlast an einem Widerstand (R3) erzeugt. Der Operationsverstärker (10) vergleicht die von der Zenerdiode (Z) erzeugte Referenzspannung mit der Spannung am Widerstand (R3), wobei der Operationsverstärker (10) den Leistungstransistor (5) so ansteuert, dass der Strom über dem Widerstand (R3) einen Spannungsabfall erzeugt, welcher der Referenzspannung der Zenerdiode (Z) entspricht. Dabei wird der Leistungstransistor (5) als zuschaltbare Last über einen Transistor (7) zu- und abgeschaltet. Wenn der Transistor durchschaltet, wird die Kathode der Zenerdiode (Z) mit Masse verbunden. Damit ist auch die Referenzspannung des Operationsverstärkers (10) gleich Null, was ein Abschalten des Leistungstransistors (5) bewirkt. Dem Transistor (7) zum Ein- und Ausschalten der Referenzspannung ist wiederum ein Timer-Baustein (6) vorgeschaltet, der - getriggert durch die positive Flanke des Blinkimpulses - die Referenzspannung zeitverzögert für eine kurze Zeitdauer einschaltet.

Die erfindungsgemäß ausgebildete Blinkleuchte gemäß Figur 3 enthält in einer besonderen Ausführungsform der Erfindung außer der vorstehend ausführlich geschilderten zuschaltbaren Last (5) eine Ausfallkontrollschaltung (8) für die Leuchtdioden (2). Beim Ausfall einer Leuchtdiode (2) verhindert diese Ausfallkontrollschaltung (8) über eine Logik (9) das Zuschalten der Last (5). Dies führt dazu, dass in diesem Fall die Stromschwelle unterschritten wird und die Stromüberwachungsschaltung (4A) im Blinkgeber (4) auch beim Ausfall einer Leuchtdiode (2) in vorteilhafter Weise einen Fehler anzeigt.

Die Ausfallkontrollschaltung ist nur optional, da der Ausfall einer Leuchtdiode im Vergleich zu dem Ausfall einer Glühlampe viel unwahrscheinlicher ist.

Zur Ausfallkontrolle misst die Ausfallkontrollschaltung (8) den Strom in den parallelen LED-Stromzweigen und vergleicht diese miteinander. Falls diese Ströme sich um mehr als einen bestimmten Toleranzwert voneinander unterscheiden, wird der Ausfall einer LED signalisiert.

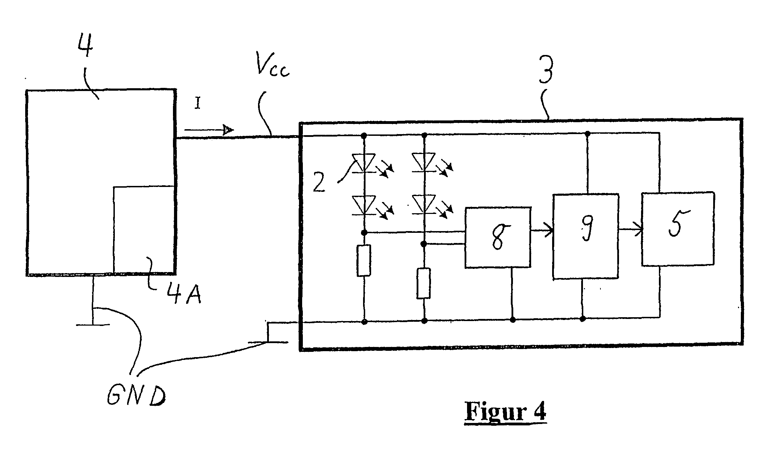

Figur 4 zeigt eine Variante der Erfindung bei der keine Glühlampen sondern nur Leuchtdioden (2) eingesetzt werden, in Verbindung mit einem Blinkgeber (4), dessen Stromüberwachungsschaltung (4A) für Glühlampenbetrieb ausgebildet ist.

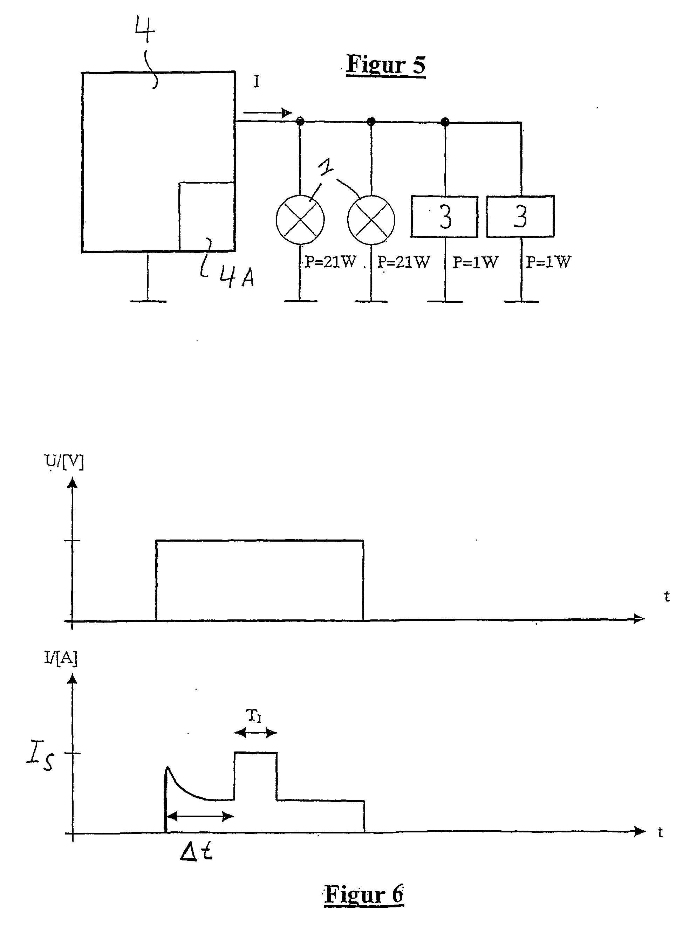

In Figur 5 ist schematisch eine Lichtanlage, insbesondere eine Blinklichtsignalanlage gezeigt. Diese Anordnung würde einem Zugfahrzeug mit zwei Glühlampen-Blinkleuchten pro Fahrtrichtung und einem Anhänger mit zwei erfindungsgemäßen LED-Blinkleuchten pro Fahrtrichtung entsprechen. Das entsprechende Zeitdiagramm für den Blinkimpuls und den Strömverlauf ist in Figur 6 gezeigt. Dort ist auch das "Simulationszeitfenster", welches dem Kontrollzeitfenster der Stromüberwachungsschaltung (4A) entspricht, eingezeichnet.

In einer besonders vorteilhaften Ausführungsform der Erfindung ist die zuschaltbare Last, das Schaltelement, der Zeitbaustein und ggf. die LED-Ausfallkontrollschaltung in der LED-Leuchte integriert sind. Diese Leuchte weist lediglich zwei Anschlüsse (Versorgungsspannung und Masse) auf und unterscheidet sich somit nicht von einer Glühlampen-Leuchte. Damit kann die erfindungsgemäße LED-Leuchte in einfacher Weise gegen eine Glühlampen-Leuchte ausgetauscht werden, ohne dass die Stromüberwachungsschaltung der Lichtanlage geändert oder ebenfalls ausgetauscht werden müsste.

Falls es sich bei der Lichtanlage nicht um eine Blinklichtsignalanlage handelt, kann beispielsweise das Einschaltsignal als Triggersignal für den Zeitbaustein verwendet werden.

### Bezugszeichenliste:

- 1): Glühlampe
- 2): Leuchtdiode
- 3): LED-Leuchte
- 4): Blinkgeber
- 4A): Stromüberwachungsschaltung
- Vcc): Versorgungsleitung
- GND): Masse
- 5): Zuschaltbare Last
- 6): Zeitbaustein
- 7): Schaltelement
- 8): Ausfallkontrollsschaltung
- 9): Logik
- 10): Operationsverstärker
- R1,: R2, R3) Widerstände
- Z): Zenerdiode

## Patentansprüche

1. Lichtanlage für Kraftfahrzeuge mit einer Stromquelle und einer Stromüberwachungsschaltung (4A) zur Funktionskontrolle von mindestens einer Lampe, wobei die Lampen Glühlampen (1) und/oder Leuchtdioden (2) sind,
**dadurch gekennzeichnet, dass**
in einem parallel zu den Lampen (1,2) angeordneten Stromzweig mindestens eine nur für ein bestimmtes Zeitfenster (TI) zuschaltbare elektrische Last (5) vorgesehen ist, wobei das Zeitfenster für das Zuschalten der Last mit einem Kontrollzeitfenster der Stromüberwachungsschaltung (4A) synchronisiert ist.

2. Lichtanlage nach Anspruch 1,
**dadurch gekennzeichnet, dass**
als zuschaltbare Last (5) ein ohmscher Widerstand vorgesehen ist.

3. Lichtanlage nach Anspruch 1 oder 2,
**dadurch gekennzeichnet, dass**
als zuschaltbare Last (5) ein Halbleiter vorgesehen ist.

4. Lichtanlage nach einem der vorstehenden Ansprüche,
**gekennzeichnet durch**
einen Transistor als Schaltelement (7) zum Zu- und Abschalten der Last (5).

5. Lichtanlage nach einem der vorstehenden Ansprüche,
**dadurch gekennzeichnet, dass**
ein Zeitbaustein (6) vorgesehen ist, der einen Triggerimpuls empfängt und zeitverzögert nach diesem Triggerimpuls die Last (5) für eine bestimmte Zeitdauer einschaltet.

6. Lichtanlage nach Anspruch 5,
**dadurch gekennzeichnet, dass**
eine Kombination aus einem Widerstand und einem Kondensator (RC-Glied) als Zeitbaustein (6) vorgesehen ist.

7. Lichtanlage nach Anspruch 5,
**dadurch gekennzeichnet, dass**
ein Timer als Zeitbaustein (6) vorgesehen ist.

8. Lichtanlage nach einem der vorstehenden Ansprüche,
**dadurch gekennzeichnet, dass**
eine Ausfallkontrollschaltung (8) für die Leuchtdioden vorgesehen ist, die beim Ausfall einer Leuchtdiode das Zuschalten der Last verhindert.

9. Lichtanlage nach Anspruch 8,
**gekennzeichnet durch**
zwei oder mehrere parallele Stromzweig, in denen jeweils zwei oder mehrere Leuchtdioden in Reihenschaltung angeordnet sind, wobei die Ausfallkontrollschaltung (8) jeweils den Strom in diesen Stromzweigen misst und die gemessenen Stromwerte miteinander vergleicht.

10. Lichtanlage nach einem der vorstehenden Ansprüche,
**dadurch gekennzeichnet, dass**
dieselbe eine Blinklichtsignalanlage ist, wobei das Zeitfenster (TI), in dem die Last (5) zugeschaltet wird, kleiner ist als die Zeitdauer eines Blinkimpulses.

11. Lichtanlage nach Anspruch 9,
**dadurch gekennzeichnet, dass**
die positive Flanke beim Einschalten jeweils der Blinkimpulse als Triggersignal für den Zeitbaustein (6) verwendet wird.

## Claims

1. Lighting system for motor vehicles comprising a power source and a power monitoring circuit (4A) for controlling the operation of at least one lamp, wherein the lamps are filament bulbs (1) and/or light emitting diodes (2),
**characterized in that**
an electric load (5) resides in a branch circuit installed in parallel with the lamps (1,2) such that the load can be activated for a specified time (TI) which is synchronized with a control timer of the power monitoring circuit (4A).

2. Lighting system of claim 1,
**characterized in that**
the load (5) to be activated is an ohmic resistance.

3. Lighting system of claims 1 or 2,
**characterized in that**
the load (5) to be activated is a semiconductor.

4. Lighting system of one of the above claims,
**characterized by**
a transistor acting as a switching device (7) for activating and deactivating the load (5).

5. Lighting system of one of the above claims,
**characterized by**
a timer module (6) which receives a trigger pulse and activates the load (5) for a specified time starting at some delay after the trigger pulse.

6. Lighting system of claim 5,
**characterized by**
the timer module (6) being a combination of a resistor and a capacitor (RC element).

7. Lighting system of claim 5,
**characterized by**
a timer being provided as the timing element (6).

8. Lighting system of one of the above claims,
**characterized by**
a failure monitoring circuit (8) for the light emitting diodes which prevents the load from being activated if a light emitting diode fails.

9. Lighting system of claim 8,
**characterized by**
two or more parallel branch circuits along each of which two or more light emitting diodes are connected in series, wherein the failure monitoring circuit (8) measures the current flowing through each of said branch circuits and compares the current readings obtained.

10. Lighting system of one of the above claims,
**characterized by**
the lighting system being a direction indicator signaling system, wherein the time (TI) during which the load (5) is activated is shorter than the time of a single flash pulse.

11. Lighting system of claim 9,
**characterized in that**
the positive edge of the turn-on flash pulses is used to trigger the timer module (6).

## Revendications

1. Installation d'éclairage pour véhicules avec une source de courant et un circuit de surveillance du courant (4A) pour le contrôle du fonctionnement d'au moins une lampe,
les lampes étant des ampoules (1) et/ou des diodes lumineuses,
**caractérisée en ce qu'**au moins une charge électrique (5) commutable pour une seule fenêtre de temps définie (TI) est prévue dans une branche de courant disposée parallèlement aux lampes (1, 2), la fenêtre de temps pour la commutation de la charge étant synchronisée avec une fenêtre de temps de contrôle du circuit de surveillance du courant (4A).

2. Installation d'éclairage selon la revendication 1,
**caractérisée en ce qu'**une résistance ohmique est prévue comme charge commutable (5).

3. Installation d'éclairage selon la revendication 1 ou 2,
**caractérisée en ce qu'**un semi-conducteur est prévu comme charge commutable (5).

4. Installation d'éclairage selon l'une des revendications ci-avant,
**caractérisée par** un transistor comme élément de commutation (7) pour la mise en et hors circuit de la charge (5).

5. Installation d'éclairage selon l'une des revendications ci-avant,
**caractérisée en ce qu'**un composant de temps (6) est prévu, lequel reçoit une impulsion de déclenchement et met en circuit la charge (5) pendant un temps défini avec un retard conforme à cette impulsion de déclenchement.

6. Installation d'éclairage selon la revendication 5,
**caractérisée en ce qu'**une combinaison d'une résistance et d'un condensateur (élément RC) est prévu comme composant de temps (6).

7. Installation d'éclairage selon la revendication 5,
**caractérisée en ce qu'**un timer est prévu comme composant de temps (6).

8. Installation d'éclairage selon l'une des revendications ci-avant,
**caractérisée en ce qu'**un circuit de contrôle des défaillances (8) est prévu pour les diodes lumineuses, lequel empêche la mise en circuit de la charge en cas de défaillance d'une diode lumineuse.

9. Installation d'éclairage selon la revendication 8,
**caractérisée par** deux ou plusieurs branches de courant parallèles, dans lesquelles sont respectivement disposées deux ou plusieurs diodes lumineuses en série, le circuit de contrôle des défaillances (8) mesurant respectivement le courant dans ces branches et comparant entre elles les valeurs de courant mesurées.

10. Installation d'éclairage selon l'une des revendications ci-avant,
**caractérisée en ce que** celle-ci est une installation de signalisation clignotante, la fenêtre de temps (TI) à l'intérieur de laquelle la charge (5) est commutée étant inférieure à la durée d'une impulsion clignotante.

11. Installation d'éclairage selon la revendication 9,
**caractérisée en ce qu'**à la mise en circuit, le flanc positif de l'impulsion clignotante respective est utilisée comme signal de déclenchement pour le composant de temps (6).
